# FASCICULE DE BREVET EUROPEEN

(11) **EP 4 483 241 B1**
(45) Date de publication et mention de la délivrance du brevet: **18.03.2026**
(21) Numéro de dépôt: 23707698.9
(22) Date de dépôt: 23.02.2023
(51) Int. Cl.: G03B 23/10, G03B 21/14, F21S 43/14, F21S 43/20, B60Q 1/26, F21W 103/60

(54) **MODULE DE PROJECTION D'IMAGES LUMINEUSES AVEC DISQUE ROTATIF ET BUTÉE AXIALE AJUSTABLE**
LICHTBILDPROJEKTIONSMODUL MIT DREHSCHEIBE UND VERSTELLBAREM AXIALANSCHLAG
LIGHT IMAGE PROJECTION MODULE WITH ROTATING DISC AND ADJUSTABLE AXIAL STOP

(30) Priorité: 27.02.2022 FR 2201710
(43) Date de publication de la demande: 01.01.2025
(73) Titulaire: VALEO VISION, 93012 Bobigny Cedex (FR)
(72) Inventeur: LE TOUMELIN, Remi, 93012 BOBIGNY Cedex (FR); HENAULT, Julien, 93012 BOBIGNY Cedex (FR)
(74) Mandataire: Valeo Visibility
(86) Numéro de dépôt international: PCT/EP2023/054577
(87) Numéro de publication internationale: WO 2023/161354

(56) Documents cités:
- WO-A1-2020/119775
- US-A- 2 369 483
- US-A1- 2017 158 120
- US-B1- 10 365 546

## Description

### Domaine technique

L'invention a trait au domaine de la signalisation lumineuse et de l'éclairage, notamment pour véhicule automobile. Plus particulièrement, l'invention a trait au domaine de la signalisation lumineuse par projection d'image lumineuse.

### Technique antérieure

Le document de brevet publié DE 10 2016 122 856 A1 divulgue un module de signalisation par projection d'images lumineuses notamment aux alentours d'un véhicule automobile, comme par exemple sur le sol. Le module de signalisation comprend une source lumineuse et un disque rotatif comportant une série de micro dispositifs optiques comprenant chacun un masque et une lentille de projection du type réseau à microlentilles. Par rotation du disque, un des micro dispositifs optiques peut être disposé en face de la source lumineuse de manière à former et projeter une image lumineuse sélectionnée sur le sol avoisinant le véhicule automobile. Ce module présente la particularité que chaque micro dispositif optique disposé sur le disque comprend non seulement un masque formant l'image mais également une lentille de projection. L'espace entre le masque et la lentille de projection est donc déterminé lors de l'assemblage des micro dispositifs optiques. Cependant, cette construction requiert autant de lentilles de projection que de masques, générant ainsi un coût de fabrication important. Aussi, ces lentilles de projection sont de taille limitée, ce qui en limite la performance. Le document US 2017/158120 A1 divulgue un module de signalisation avec une source lumineuse et un disque rotatif tournant en face d'un objectif de projection fixe.

### Exposé de l'invention

L'invention a pour objectif de pallier au moins un des inconvénients de l'état de la technique susmentionné. Plus particulièrement, l'invention a pour objectif de proposer un module lumineux apte à projeter, de manière sélective, plusieurs images lumineuses, qui soit optiquement performant et de coût de fabrication limité.

L'invention a pour objet un module lumineux comprenant une source lumineuse ; un disque comprenant plusieurs diapositives aptes à être disposées, sélectivement, par rotation du disque autour d'un axe de rotation, en face de la source lumineuse ; un dispositif optique de projection configuré pour projeter une image de la diapositive en face de ladite source lumineuse ; remarquable en ce que le dispositif optique de projection est disposé de manière fixe en face de la source lumineuse ; et le disque est en appui, par un effort élastique le long de l'axe de rotation, sur une butée ajustable.

Avantageusement, le disque comprend un support circulaire, préférentiellement généralement plan, supportant ou formant les diapositives. Il peut également comprendre un moyeu supportant le support circulaire. L'appui du disque sur la butée ajustable peut être directement sur le support circulaire, ou sur le moyeu ou un arbre supportant le moyeu, au travers d'un orifice central du support circulaire.

Selon un mode avantageux de l'invention, le disque est supporté par un arbre s'étendant le long de l'axe de rotation et soumis à l'effort élastique en direction de la butée de manière à réaliser l'appui du disque sur la butée ajustable.

Selon un mode avantageux de l'invention, l'arbre fait partie d'un rotor d'un moteur électrique et est supporté par un carter dudit moteur électrique.

Selon un mode avantageux de l'invention, le moteur électrique comprend un ressort interne en appui sur le carter et l'arbre, exerçant l'effort élastique.

Selon un mode avantageux de l'invention, l'arbre traverse le carter à l'opposé du disque et le module lumineux comprend un ressort externe en appui sur une portion arrière d'un support dudit module lumineux et l'arbre, exerçant l'effort élastique.

Selon un mode avantageux de l'invention, le module lumineux comprend, en outre, une platine à circuit imprimé reliée électriquement au moteur électrique et s'engageant avec la portion arrière du support, l'appui du ressort externe sur ladite portion arrière du support étant sur ladite platine à circuit imprimé.

Avantageusement, la portion arrière du support forme deux rainures parallèles dans lesquelles la platine à circuit imprimé est fichée.

Selon un mode avantageux de l'invention, la butée ajustable s'étend suivant l'axe de rotation et comprend une extrémité arrondie en contact avec le disque.

Avantageusement, la butée ajustable comprend une broche avec un filetage extérieur s'engageant avec un filetage intérieur correspondant.

Selon un mode avantageux de l'invention, le module lumineux comprend, en outre, un support avec une portion avant logeant le dispositif optique et supportant la butée ajustable.

Selon un mode avantageux de l'invention, le support comprend une portion intermédiaire supportant le moteur électrique.

Avantageusement, la portion intermédiaire du support forme deux rainures parallèles dans lesquelles une platine rigidement fixée au moteur électrique est enfichée.

Selon un mode avantageux de l'invention, les portions avant, intermédiaire et, le cas échéant, arrière, du support sont d'un seul tenant.

Les mesures de l'invention sont intéressantes en ce qu'elles procurent un module lumineux apte à projeter, de manière sélective, des images lumineuses avec une grande qualité optique tout en limitant les coûts de fabrication.

Le positionnement fixe du dispositif optique de projection par rapport à la source lumineuse, et son unicité qui en résulte, autorisent un encombrement plus grand, notamment l'utilisation de plusieurs lentilles superposées, et ainsi une meilleure qualité optique.

Aussi, la butée ajustable permet de s'acquitter de tolérances importantes résultant des chaînes de cotes fonctionnelles entre le dispositif optique de projection et les éléments supportant le disque, en l'occurrence le moteur électrique. Elle permet ainsi de réduire de manière notoire les tolérances de positionnement axial relatif entre le dispositif optique de projection et le disque, et ce non seulement lors de l'assemblage du module lumineux mais également après assemblage lorsque le module lumineux est en fonction. L'effet des dilatations au sein du module lumineux lors de son utilisation, typiquement entre -40°C et +85°C, ont un effet très limité sur le positionnement axial relatif entre le dispositif optique de projection et le disque. Les défocalisations résultant des dilatations thermiques se voient ainsi fortement réduites.

D'autres caractéristiques et avantages de la présente invention seront mieux compris à l'aide de la description et des dessins.

### Brève description des dessins

[Fig.1] est une vue en perspective d'un module lumineux selon l'invention.
[Fig.2] représente une vue en coupe longitudinale du module lumineux de la [Fig.1].

### Description détaillée

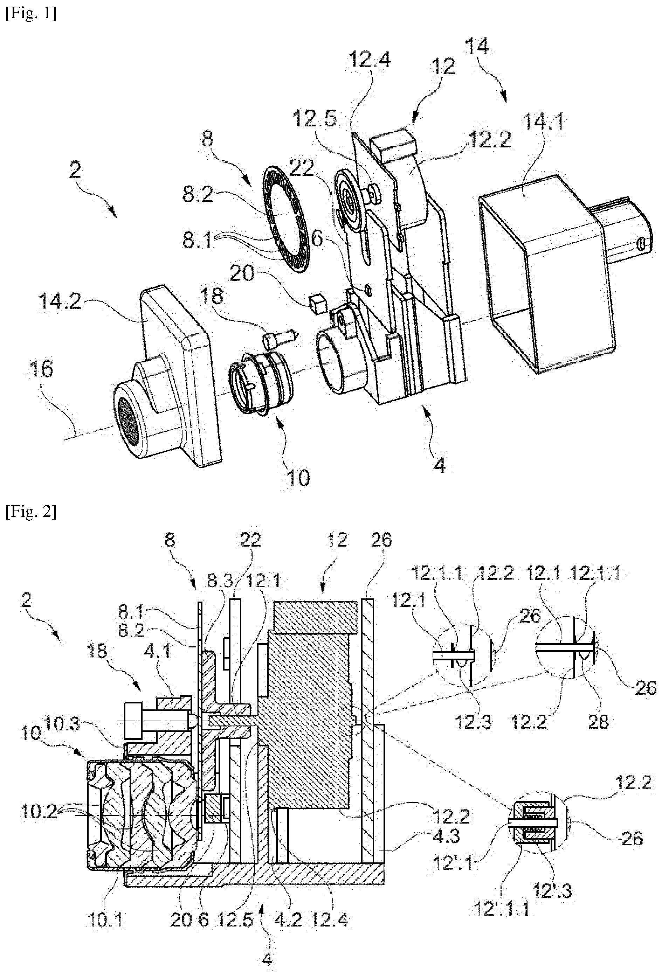

La [Fig.1] illustre en perspective et de manière éclatée un module lumineux conforme à l'invention.

Le module lumineux 2 comprend, essentiellement un support 4, une source lumineuse 6, un disque 8 comportant des diapositives 8.1, un dispositif optique de projection 10, un moteur électrique 12 supportant le disque 8 et apte à le positionner angulairement, et un boîtier 14. Ce dernier est en l'occurrence formé d'une partie principale 14.1 et d'un couvercle 14.2 refermant la partie principale à l'avant du module lumineux 2, à savoir au niveau du dispositif optique de projection 10.

La source lumineuse 6 et le dispositif optique de projection 10 sont montés de manière fixe sur le support 4 et aligné suivant un axe optique 16 du module lumineux 2. Le disque 8 est disposé entre la source lumineuse 6 et le dispositif optique de projection 10 de manière à, par rotation dudit disque, positionner une diapositive 8.1 entre la source lumineuse 6 et le dispositif de projection optique 10, en alignement avec l'axe optique 16, de manière à ce que le module lumineux puisse projeter l'image de la diapositive. Le mouvement et positionnement angulaire du disque 8 est assuré par le moteur électrique 12 qui peut être du type moteur pas à pas. Le moteur électrique 12 peut comprendre une platine 12.4 et une partie avant circulaire en saillie, formant une portée 12.5 qui vont être davantage décrits en relation avec la [Fig.2].

Le disque 8 comprend, outre les diapositives 8.1, un support circulaire 8.2 généralement plan, supportant ou formant les diapositives 8.1. Les diapositives peuvent être des masques présentant des formes différentes, correspondant aux différentes images à projeter. Ces masques peuvent être formés par des films en matériau transparent opacifié localement suivant l'image à former et projeter. Avantageusement, le support circulaire 8.2 est en verre transparent et les diapositives 8.1 sont formées par dépôt de matériau opacifiant ou réfléchissant sur le support circulaire 8.2.

Un collimateur 20 peut être disposé directement en face de la source lumineuse 6, c'est-à-dire optiquement entre la source lumineuse 6 et la disque 8. Il peut s'agir d'une pièce en matériau transparent avec une face d'entrée de la lumière spécialement formée pour dévier par réfraction davantage les rayons entrants à la périphérie de ladite face d'entrée, et une ou plusieurs faces latérales aptes à dévier par réflexion totale les rayons entrants à la périphérie de la pièce. Une telle construction de collimateur est en soi bien connue de l'homme de métier.

La source lumineuse 6 peut être du type diode à électroluminescence et peut être disposée sur une platine à circuit imprimé 22. Cette platine à circuit imprimé 22 est enfichée, lors du montage dans des rainures correspondantes formées dans le support 4. La platine à circuit imprimé 22 peut s'étendre vers le haut au-delà de l'axe de rotation du disque 8, auquel cas elle comprend une encoche apte à recevoir l'axe de rotation du disque 8.

Le module lumineux 2 est avantageusement destiné à être monté sur un élément de carrosserie d'un véhicule automobile, tel qu'un rétroviseur, de manière à projeter les différentes images, de manière sélective, sur le sol avoisinant le véhicule automobile. Les images projetées peuvent prendre diverses formes et contenus ; elles peuvent par exemple être des pictogrammes donnant des informations sur l'état du véhicule, comme notamment l'état de charge de ses accumulateurs d'énergie électrique de traction, dans le cas d'un véhicule hybride ou électrique. Ces pictogrammes peuvent notamment représenter schématiquement une pile électrique avec un niveau de remplissage correspondant au niveau de charge des accumulateurs d'énergie électrique de traction. Ce type de pictogramme est purement exemplatif, étant entendu que d'autres types de pictogramme peuvent être envisagés.

L'utilisation d'un dispositif optique de projection 10 fixe est avantageuse en ce qu'elle permet de prévoir plusieurs lentilles superposées, assurant un stigmatisme et, partant, une projection nette de l'image. Cependant, pour assurer cette qualité de projection, la distance relative, suivant l'axe optique 16, entre le dispositif optique de projection 10 et la diapositive 8.1 doit être maitrisé, avantageusement dans une tolérance de l'ordre de quelques µm. La diapositive doit en effet être située dans le plan focal du dispositif optique de projection 10. Or, le montage rotatif du disque 8 a pour effet d'additionner des tolérances de fabrication entre le dispositif optique de projection 10 et le disque 8 au point de ne pas nécessairement être dans la tolérance voulue.

A cet effet, le module lumineux 2 comprend une butée ajustable 18 disposée suivant l'axe de rotation du disque 8 et sur laquelle ledit disque 8 est en appui par un effort élastique. Cette butée ajustable 18 est disposée sur le support 4 à une position adjacente au dispositif optique de projection 10. Cette butée ajustable 18 permet ainsi lors de l'assemblage du module lumineux 2 d'ajuster finement le positionnement axial du disque 8 par rapport au dispositif optique de projection 10, permettant ainsi de compenser les tolérances de fabrication et d'assemblage des différents composant du module lumineux 2.

L'appui du disque 8 contre la butée ajustable 18 est réalisée par un effort élastique exercé de manière permanente sur l'arbre de rotation du disque 8 en direction de ladite butée ajustable 18. Cet effort élastique va être détaillé plus loin en relation avec la [Fig.2].

La butée ajustable 18 est avantageusement une broche s'étendant suivant l'axe de rotation du disque 8 est pourvue d'un filetage extérieur, similairement à une vis de fixation, s'engageant avec une filetage intérieure correspondant sur le support 4, de sorte que sa rotation provoque un déplacement axial. L'engagement entre le filetage extérieur de la butée ajustable 18 et le filetage intérieur sur le support 4 peut présenter un serrage de manière à ce que la rotation de la butée ajustable nécessite l'application d'un couple, par exemple compris entre 0.5 et 1 Nm, supérieur à 10 fois le couple généré par l'appui élastique du disque 8 lorsque celui-ci est en rotation. Aussi, les filetages extérieur et intérieur susmentionnés peuvent présenter un pas plus faible que le pas standard des filetages métriques, de manière à faciliter un ajustement fin de la position axiale du disque 8. La broche est avantageusement en métal, comme de l'acier ou de l'acier inoxydable.

La butée ajustable 18 peut comprendre à son extrémité distale une face arrondie et symétrique en rotation, par exemple sphérique, en appui sur le disque 8. Il s'agit là d'un contact à frottement.

Il est toutefois entendu que la butée ajustable peut prendre d'autres formes tout en assurant sa fonction de butée axiale avec possibilité d'ajustement. A titre d'exemple et de manière non limitante, la butée ajustable peut comprendre une pièce mobile dans une direction perpendiculaire à la direction axiale, avec une face inclinée par rapport à la direction perpendiculaire apte à glisser le long d'une face correspondante du support, le déplacement de ladite pièce mobile assurant alors également un déplacement axial. Une pièce d'appui, similaire à l'extrémité distale de la broche formée par la butée ajustable 18 à la [Fig.1], peut alors être disposée libre de coulisser en contact direct avec le disque et avec la pièce mobile.

La [Fig.2] est une vue en coupe longitudinale du module lumineux de la [Fig.1], ladite coupe passant par l'axe optique 16 et l'axe de rotation du disque 8.

Le disque 8 comprend un moyeu 8.3 fixé au support circulaire 8.2 et supporté par un arbre 12.1 de rotor du moteur électrique 12. Ce dernier comprend un carter 12.2 qui est fixé au support 4. Le disque 8 est donc porté par le carter 12.2 du moteur électrique 12 via l'arbre 12.1 et le moyeu 24. L'arbre 12.1 est soumis à un effort élastique dans la direction axiale en direction de la butée ajustable 18, comme cela est illustré par les trois vues de détail constituant des alternatives.

Suivant la vue de détail de gauche, le moteur électrique 12 comprend un ressort interne 12.3 en appui contre une paroi arrière du carter 12.2 et contre une surface d'appui 12.1.1 de l'arbre 12.1. Ce ressort 12.3 est en compression de sorte à exercer un effort élastique sur l'arbre en appui sur la paroi arrière du carter 12.2. Il est à noter que la construction du moteur électrique, en particulier les paliers (non représentés) supportant l'arbre 12.1 permettent un déplacement axial de l'arbre sur une course limitée, par exemple inférieure ou égale à 1mm, préférentiellement inférieure ou égale à 0.5mm. Le ressort interne 12.3 est en l'occurrence sous la forme d'une lame élastique en U, étant toutefois entendu que d'autres formes de ressort sont envisageables. A cet effet, la vue de détail du bas montre une alternative à la configuration de la vue de détail de gauche, où le ressort 12'.3 est hélicoïdal et disposé autour de l'arbre 12'.1. La surface d'appui 12'.1.1 forme en l'occurrence une cavité recevant une contre-pièce logeant le ressort 12'.3. L'appui élastique sur l'arbre 12.1 et 12'.1 tel qu'il vient d'être décrit est alors intégré au moteur électrique. Il est à noter que ce type d'appui élastique sur une telle course limitée est prévu sur certains moteurs électriques commercialement disponibles.

Suivant la vue de détail de droite, l'arbre 12.1 traverse la paroi arrière du carter 12.2 du moteur électrique 12, et un ressort externe 28, en l'occurrence similaire aux ressorts internes 12.3 et 12'.3 des configurations aux vues de détail de gauche et du bas, est disposé à l'extérieur du moteur électrique 12, à savoir entre la paroi arrière du carter 12.2 dudit moteur électrique 12 et une platine à circuit imprimé 26 du moteur, en appui sur le support 4. En l'occurrence, la platine à circuit imprimé 26 est enfichée dans deux rainures parallèles 4.3 formant une portion arrière du support 4. L'action du ressort externe 28 est similaire à celle du ressort interne 12.3 de la configuration à la vue de détail de gauche, à savoir en appui contre la platine à circuit imprimé 26 et contre une surface d'appui 12.1.1 de l'arbre 12.1.

Le moteur électrique 12 est fixé sur une portion intermédiaire 4.2 du support 4 formant deux rainures parallèles dans lesquelles est enfichée une platine 12.4 du moteur électrique 12. Ce dernier peut comprendre une partie avant circulaire en saillie, formant une portée 12.5. Cette dernière épouse une encoche correspondante formée dans une paroi de la portion intermédiaire 4.2 du support 4. Le moteur électrique est ainsi positionné suivant une direction verticale (suivant l'orientation du module lumineux tel que représenté aux figures 1 et 2) et aussi suivant une direction horizontale suivant l'orientation du module lumineux tel que représenté aux figures 1 et 2), c'est-à-dire axiale, par appui vers l'avant contre la paroi en question.

On comprend alors qu'en l'absence de la butée ajustable 18 et de l'appui élastique du disque 8 contre ladite butée ajustable 18, le positionnement axial du disque 8 et plus particulièrement des diapositives 8.1, par rapport au dispositif optique de projection 10 serait sujet aux tolérances de fabrication du support 4 ainsi qu'aux tolérances d'assemblage du dispositif optique de projection 10 sur le support et du moteur électrique 12 sur le support 4. La butée ajustable 18 et l'appui élastique du disque 8 contre ladite butée ajustable 18 permettent ainsi de facilement compenser ces tolérances de fabrication et d'assemblage.

Il est à noter que contrairement ce qui est illustré aux figures 1 et 2, le support circulaire 8.2 du disque 8 peut comprendre un orifice central, de sorte que le moyeu 8.3 ou l'arbre 12.1 soit en appui élastique contre la butée ajustable 18.

Comme cela est visible à la [Fig.2], le dispositif optique de projection 10 comprend une virole 10.1 logeant un empilement de lentilles 10.2, formant ainsi un barillet optique. La virole 10.1 est en l'occurrence formée de deux parties assemblées l'une à l'autre, à savoir une partie cylindrique avant avec un bord avant formant un épaulement intérieur, et une partie cylindrique arrière avec un bord arrière formant un épaulement intérieur. Ces deux parties de virole peuvent être assemblées par un mouvement de rapprochement axial alors que les lentilles empilées sont à l'intérieur de ces deux parties une fois rapprochées. Alternativement, les deux parties de virole 10.1 peuvent être assemblées l'une à l'autre en l'absence des lentilles 10.2, alors qu'un des bords avant ou arrière est droit, c'est-à-dire ne forme pas d'épaulement, les lentilles étant alors insérées dans le volume de la virole 10.1 par ce bord, ce dernier étant ensuite replié sur la lentille la plus proche. La virole 10.1 comprend une collerette ou bride 10.3 prenant appui sur le support 4, plus particulièrement sur une portion avant 4.1 dudit support. Cette dernière est en l'occurrence formée sur la partie arrière de la virole 10.1.

La portion avant 4.1 du support 4 forme un orifice traversant dans lequel est logé le dispositif optique de projection 10. Cet orifice permet un centrage adéquat du dispositif optique de projection 10. Il permet aussi un positionnement axial précis, en l'occurrence via l'appui de la collerette ou bride 10.3 contre une surface circulaire avant de la portion avant 4.1 du support 4.

On peut observer que la butée ajustable 18 est supportée par la partie avant 4.1 du support 4, recevant le dispositif optique de projection 10. La butée ajustable 18 est ainsi directement adjacente au dispositif optique de projection 10 et à l'orifice de la partie avant 4.1 du support 4 logeant ledit dispositif optique de projection 10. Elle permet ainsi d'éviter ou du moins de fortement minimiser d'éventuelles dispersions de tolérances entre la position de son extrémité distale en contact avec le disque et la position axiale du dispositif optique de projection 10. En d'autres termes, une fois la position axiale du disque 8 ajustée au moyen de la butée ajustable 18, lors de l'assemblage du module lumineux 2, la position axiale relative entre le disque 8 et le dispositif optique de projection 10 va rester dans une tolérance très limitée, indépendamment des dilatations du reste du module lumineux, en particulier du support 4 au niveau de ses portions intermédiaire 4.2 et arrière 4.3.

Le support 4, y incluses ses portions avant 4.1, intermédiaire 4.2 et arrière 4.3, est avantageusement réalisé d'un seul tenant, par injection de matière préférentiellement plastique.

## Revendications

1. Module lumineux (2) comprenant :
- une source lumineuse (6) ;
- un disque (8) comprenant plusieurs diapositives (8.1) aptes à être disposées, sélectivement, par rotation du disque autour d'un axe de rotation, en face de la source lumineuse (6) ;
- un dispositif optique de projection (10) configuré pour projeter une image de la diapositive (8.1) en face de ladite source lumineuse (6) ;
dans lequel le dispositif optique de projection (10) est disposé de manière fixe en face de la source lumineuse (6) ; et **caractérisé en ce que** le disque (8) est en appui, par un effort élastique le long de l'axe de rotation, sur une butée ajustable (18).

2. Module lumineux (2) selon la revendication 1, dans lequel le disque (8) est supporté par un arbre (12.1) s'étendant le long de l'axe de rotation et soumis à l'effort élastique en direction de la butée ajustable (18) de manière à réaliser l'appui du disque sur la butée ajustable.

3. Module lumineux (2) selon la revendication 2, dans lequel l'arbre (12.1) fait partie d'un rotor d'un moteur électrique (12) et est supporté par un carter (12.2) dudit moteur électrique (12).

4. Module lumineux (2) selon la revendication 3, dans lequel le moteur électrique (12) comprend un ressort interne (12.3) en appui sur le carter (12.2) et l'arbre (12.1), exerçant l'effort élastique.

5. Module lumineux (2) selon la revendication 3, dans lequel l'arbre (12.1) traverse le carter (12.2) à l'opposé du disque (8) et le module lumineux (2) comprend un ressort externe (28) en appui sur une portion arrière (4.3) d'un support (4) dudit module lumineux (2), et l'arbre (12.1), exerçant l'effort élastique.

6. Module lumineux (2) selon la revendication 5, comprenant, en outre, une platine à circuit imprimé (26) reliée électriquement au moteur électrique (12) et s'engageant avec la portion arrière (4.3) du support (4), l'appui du ressort externe (28) sur ladite portion arrière (4.3) du support (4) étant sur ladite platine à circuit imprimé (26).

7. Module lumineux (2) selon l'une des revendications 1 à 6, dans lequel la butée ajustable (18) s'étend suivant l'axe de rotation et comprend une extrémité arrondie en contact avec le disque (8).

8. Module lumineux (2) selon l'une des revendications 1 à 7, comprenant, en outre, un support (4) avec une portion avant (4.1) logeant le dispositif optique de projection (10) et supportant la butée ajustable (18).

9. Module lumineux (2) selon l'une des revendications 3 à 6, et selon la revendication 8, dans lequel le support (4) comprend une portion intermédiaire (4.2) supportant le moteur électrique (12).

10. Module lumineux (2) selon la revendication 9, dans lequel les portions avant (4.1), intermédiaire (4.2) et, le cas échéant, arrière (4.3), du support (4) sont d'un seul tenant.

## Patentansprüche

1. Lichtmodul (2) umfassend:
- eine Lichtquelle (6);
- eine Scheibe (8), die mehrere Dias (8.1) umfasst und die durch Drehung um eine Drehachse selektiv vor der Lichtquelle (6) angeordnet werden können;
- eine optische Projektionsvorrichtung (10), die konfiguriert ist, um ein Bild des vor der Lichtquelle (6) angeordneten Dias (8.1) zu projizieren;
wobei die optische Projektionsvorrichtung (10) fest vor der Lichtquelle (6) angeordnet ist; und **dadurch gekennzeichnet, dass** die Scheibe (8) durch eine elastische Kraft entlang der Drehachse an einem einstellbaren Anschlag (18) anliegt.

2. Lichtmodul (2) nach Anspruch 1, wobei die Scheibe (8) von einer Welle (12.1) getragen wird, die sich entlang der Drehachse erstreckt und der elastischen Kraft in Richtung des einstellbaren Anschlags (18) ausgesetzt ist, um die Anlage der Scheibe am einstellbaren Anschlag zu bewirken.

3. Lichtmodul (2) nach Anspruch 2, wobei die Welle (12.1) Teil eines Rotors eines Elektromotors (12) ist und von einem Gehäuse (12.2) des Elektromotors (12) getragen wird.

4. Lichtmodul (2) nach Anspruch 3, wobei der Elektromotor (12) eine interne Feder (12.3) umfasst, die am Gehäuse (12.2) und der Welle (12.1) anliegt und die elastische Kraft ausübt.

5. Lichtmodul (2) nach Anspruch 3, wobei die Welle (12.1) das Gehäuse (12.2) gegenüber der Scheibe (8) durchquert und das Lichtmodul (2) eine externe Feder (28) umfasst, die an einem hinteren Teil (4.3) eines Trägers (4) des Lichtmoduls (2) und der Welle (12.1) anliegt und die elastische Kraft ausübt.

6. Lichtmodul (2) nach Anspruch 5, ferner umfassend eine Leiterplatte (26), die elektrisch mit dem Elektromotor (12) verbunden ist und mit dem hinteren Teil (4.3) des Trägers (4) in Eingriff steht, wobei die Anlage der externen Feder (28) an dem hinteren Teil (4.3) des Trägers (4) auf der Leiterplatte (26) erfolgt.

7. Lichtmodul (2) nach einem der Ansprüche 1 bis 6, wobei der einstellbare Anschlag (18) entlang der Drehachse verläuft und ein abgerundetes Ende aufweist, das mit der Scheibe (8) in Kontakt steht.

8. Lichtmodul (2) nach einem der Ansprüche 1 bis 7, ferner umfassend einen Träger (4) mit einem vorderen Teil (4.1), der die optische Projektionsvorrichtung (10) aufnimmt und den einstellbaren Anschlag (18) trägt.

9. Lichtmodul (2) nach einem der Ansprüche 3 bis 6 und nach Anspruch 8, wobei der Träger (4) einen mittleren Teil (4.2) umfasst, der den Elektromotor (12) trägt.

10. Lichtmodul (2) nach Anspruch 9, wobei die vorderen (4.1), mittleren (4.2) und gegebenenfalls hinteren (4.3) Teile des Trägers (4) einteilig ausgebildet sind.

## Claims

1. Light module (2) comprising:
- a light source (6);
- a disc (8) comprising several slides (8.1) capable of being selectively positioned, by rotation of the disc around an axis of rotation, in front of the light source (6);
- an optical projection device (10) configured to project an image of the slide (8.1) located in front of said light source (6);
wherein the optical projection device (10) is fixedly arranged in front of the light source (6); and **characterized in that**
the disc (8) rests, by an elastic force along the axis of rotation, against an adjustable stop (18).

2. Light module (2) according to claim 1, wherein the disc (8) is supported by a shaft (12.1) extending along the axis of rotation and subjected to the elastic force in the direction of the adjustable stop (18) so as to achieve the resting of the disc against the adjustable stop.

3. Light module (2) according to claim 2, wherein the shaft (12.1) is part of a rotor of an electric motor (12) and is supported by a housing (12.2) of said electric motor (12).

4. Light module (2) according to claim 3, wherein the electric motor (12) comprises an internal spring (12.3) resting against the housing (12.2) and the shaft (12.1), exerting the elastic force.

5. Light module (2) according to claim 3, wherein the shaft (12.1) passes through the housing (12.2) opposite to the disc (8) and the light module (2) comprises an external spring (28) resting against a rear portion (4.3) of a support (4) of said light module (2), and the shaft (12.1), exerting the elastic force.

6. Light module (2) according to claim 5, further comprising a printed circuit board (26) electrically connected to the electric motor (12) and engaging with the rear portion (4.3) of the support (4), the resting of the external spring (28) on said rear portion (4.3) of the support (4) being on said printed circuit board (26).

7. Light module (2) according to any one of claims 1 to 6, wherein the adjustable stop (18) extends along the axis of rotation and comprises a rounded end in contact with the disc (8).

8. Light module (2) according to any one of claims 1 to 7, further comprising a support (4) with a front portion (4.1) housing the optical projection device (10) and supporting the adjustable stop (18).

9. Light module (2) according to any one of claims 3 to 6, and according to claim 8, wherein the support (4) comprises an intermediate portion (4.2) supporting the electric motor (12).

10. Light module (2) according to claim 9, wherein the front (4.1), intermediate (4.2) and, if applicable, rear (4.3) portions of the support (4) are in one piece.
